# EUROPEAN PATENT APPLICATION

(11) **EP 4 726 460 A1**
(43) Date of publication of application: **15.04.2026**
(21) Application number: 25184891.7
(22) Date of filing: 24.06.2025
(51) Int. Cl.: G02B 27/01, G02B 27/28, G02B 27/00

(54) **OPTICAL SYSTEM AND DISPLAY APPARATUS**

(30) Priority: 08.10.2024 CN 202411394698
(71) Applicant: Beijing Zitiao Network Technology Co., Ltd., Beijing 100190 (CN); Lemon Inc., Grand Cayman, KY1-1205 (KY)
(72) Inventor: FU, Ling, Beijing, 100028 (CN); LI, Xin, Beijing, 100028 (CN); ZHANG, Ziyang, Los Angeles, 90066 (US); HU, Hsin-Yi, Beijing, 100028 (CN); YANG, Xingwei, Los Angeles, 90066 (US)
(74) Representative: Grünecker Patent- und Rechtsanwälte PartG mbB

(57) **Abstract**

An optical system and a display apparatus are provided. The optical system includes: a lens assembly (100), a transflective film (200), a reflective polarizing layer (300), and a phase retardation film (400). The lens assembly (100) includes at least two lenses, the at least two lenses include a first surface (101), a first attachment surface (105) and a second surface (102) arranged in sequence along a direction of an optical axis (OA) of the lens assembly (100). The transflective film (200) is provided on a side of the first surface (101) away from the second surface (102). The reflective polarizing layer (300) is provided on a side of the second surface (102) away from the first surface (101). The phase retardation film (400) is provided on the first attachment surface (105). The first attachment surface (105) is a curved surface, and a ratio of a minimum value of a curvature radius of the first attachment surface (105) to a curvature radius of the second surface (102) is not less than 3. A folded optical path can be formed by providing the transflective film (200), the reflective polarizing layer (300), and the phase retardation film (400), such that the optical system is smaller in volume and lighter. The first attachment surface (105) of the lens assembly (100) can provide the phase retardation film (400) with an attachment surface which tends to be a plane on the whole, which is advantageous to reducing the wrinkles generated in the process of attaching the phase retardation film (400).

## Description

### CROSS-REFERENCE TO RELATED APPLICATION

The present application claims priority of the Chinese Patent Application No. 202411394698.X filed on October 8, 2024, the entire disclosure of which is incorporated herein by reference as portion of the present application.

### TECHNICAL FIELD

At least one embodiment of the present disclosure relates to an optical system and a display apparatus.

### BACKGROUND

A Virtual Reality (VR) device is a technical device capable of creating an immersive experience for a user. In some VR devices, the Pancake technology is applied, which enables structures of the VR devices to be compact and light.

### SUMMARY

At least one embodiment of the present disclosure provides an optical system and a display apparatus.

At least one embodiment of the present disclosure provides an optical system, the optical system including: a lens assembly, including at least two lenses, the at least two lenses including a first surface, a first attachment surface and a second surface arranged in sequence along a direction of an optical axis of the lens assembly; a transflective film, provided on a side of the first surface away from the second surface; a reflective polarizing layer , provided on a side of the second surface away from the first surface; and a phase retardation film, provided on the first attachment surface; wherein the first attachment surface is a curved surface, and a ratio of a minimum value of a curvature radius of the first attachment surface to a curvature radius of the second surface is not less than 3.

For example, the optical system according to an embodiment of the present disclosure, wherein the reflective polarizing layer is provided on the second surface, and the ratio of the minimum value of the curvature radius of the first attachment surface to the curvature radius of the second surface is in a range from 3 to 5.

For example, the optical system according to an embodiment of the present disclosure, wherein a curvature radius of the first attachment surface in a first direction is different from a curvature radius of the first attachment surface in a second direction; and the first direction intersects with the second direction, and the first direction and the second direction respectively intersect with the optical axis.

For example, the optical system according to an embodiment of the present disclosure, wherein a curvature of the first attachment surface in the first direction is 0.

For example, the optical system according to an embodiment of the present disclosure, wherein the first attachment surface includes at least one of a cylindrical surface, an elliptical cylindrical surface, a hyperbolic cylindrical surface, a parabolic cylindrical surface, a conical surface, an elliptical conical surface, a spherical surface, an ellipsoidal surface, an elliptical paraboloid, a hyperboloid of one sheet, a hyperboloid of two sheets, a hyperbolic paraboloid, and a torus.

For example, the optical system according to an embodiment of the present disclosure, wherein the first attachment surface is a ruled surface.

For example, the optical system according to an embodiment of the present disclosure, wherein the first attachment surface is a developable surface.

For example, the optical system according to an embodiment of the present disclosure, wherein a generatrix of the first attachment surface passing through the optical axis is perpendicular to the optical axis.

For example, the optical system according to an embodiment of the present disclosure, wherein a generatrix of the first attachment surface passing through the optical axis is not perpendicular to the optical axis.

At least one embodiment of the present disclosure provides an optical system, the optical system including: a lens assembly, including at least two lenses, the at least two lenses including a first surface, a first attachment surface and a second surface arranged in sequence along a direction of an optical axis of the lens assembly; a transflective film, provided on a side of the first surface away from the second surface; a reflective polarizing layer, provided on a side of the second surface away from the first surface; and a phase retardation film, provided on the first attachment surface; wherein the first attachment surface is a plane which intersects with and is not perpendicular to the optical axis of the lens assembly.

For example, the optical system according to an embodiment of the present disclosure, an edge-to-center thickness ratio of a lens including the first attachment surface is not less than 1/3.

For example, the optical system according to an embodiment of the present disclosure, wherein the at least two lenses include a first lens and a second lens, and the at least two lenses further include a third surface; and one of the first attachment surface and the third surface is a surface of the first lens, and the other is a surface of the second lens.

For example, the optical system according to an embodiment of the present disclosure, wherein the phase retardation film is bonded between the first attachment surface and the third surface.

For example, the optical system according to an embodiment of the present disclosure, wherein an air gap is provided between the third surface and the first attachment surface.

For example, the optical system according to an embodiment of the present disclosure, wherein an edge-to-center thickness ratio of the first lens is not less than 1/3, and an edge-to-center thickness ratio of the second lens is not less than 1/3.

For example, the optical system according to an embodiment of the present disclosure, further including a linear polarizing film; wherein the linear polarizing film is provided on a side of the reflective polarizing layer away from the transflective film.

For example, the optical system according to an embodiment of the present disclosure, wherein the at least two lenses further include a second attachment surface; the second attachment surface is located on a side of the reflective polarizing layer away from the second surface, and the linear polarizing film is provided on the second attachment surface; the second attachment surface is a curved surface, and a curvature radius of the second attachment surface in a third direction is different from a curvature radius of the second attachment surface in a fourth direction; and the third direction intersects with the fourth direction, and the third direction and the fourth direction respectively intersect with the optical axis.

At least one embodiment of the present disclosure provides a display apparatus, the display apparatus including a display screen and the above-mentioned optical system, wherein a display surface of the display screen is located on the side of the first surface away from the second surface.

### BRIEF DESCRIPTION OF DRAWINGS

In order to more clearly illustrate the technical solutions of the embodiments of the present disclosure, the accompanying drawings of the embodiments will be briefly introduced below, it is obvious that the accompanying drawings in the following description merely relate to some embodiments of the present disclosure, but not the limitations of the present disclosure.
Fig. 1 is a schematic diagram of an optical system.
Fig. 2A to Fig. 2C are schematic diagrams of attachment of an optical film layer of the optical system.
Fig. 3 is a schematic diagram of the optical system provided in one example in at least one embodiment of the present disclosure.
Fig. 4 is a schematic diagram of a first attachment surface provided in one example in at least one embodiment of the present disclosure.
Fig. 5 shows a schematic diagram of an ellipsoidal surface.
Fig. 6 shows a schematic diagram of a torus.
Fig. 7 shows a schematic diagram of a cylindrical surface.
Fig. 8 shows a schematic diagram of a conical surface.
Fig. 9 to Fig. 12 are schematic diagrams of the optical systems provided in different examples in at least one embodiment of the present disclosure.
Fig. 13 is a schematic diagram of a second attachment surface provided in one example in at least one embodiment of the present disclosure.
Fig. 14 is a schematic diagram of a display apparatus provided in one example in at least one embodiment of the present disclosure.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects.

In the embodiment of the present disclosure, the features, "perpendicular to," "parallel to," "identical to," etc., all include the features "perpendicular to," "parallel to," "identical to," etc., in the strict sense, as well as the cases containing certain errors, such as "approximately perpendicular to," "approximately parallel to," "approximately identical to," etc. Considering the measurement and the errors related to the measurement of a specific quantity (e.g., the limitation of the measurement system), they are within an acceptable deviation range for the specific quantity determined by those skilled in the art. For example, the "center" in the embodiment of the present disclosure can include a strictly geometric center position and a roughly central position in a small area around the geometric center. For example, the term "approximately" can mean within one or more standard deviations, or within 10% or 5% deviation of the stated value.

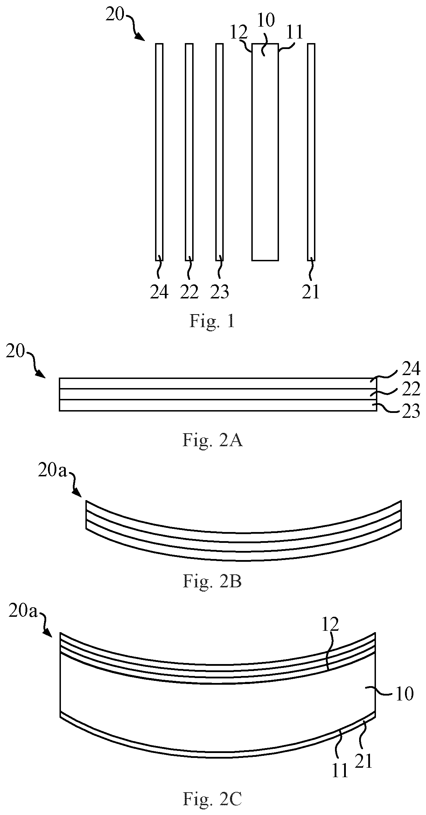

Fig. 1 is a schematic diagram of an optical system.

Pancake technology achieves ultra-short focal length imaging by folding back light multiple times, thereby significantly reducing an overall volume and weight of a head-mounted display apparatus, such as a VR device. Referring to Fig. 1, for example, the optical system applying the Pancake technology includes a lens 10 and an optical film layer 20. Fig. 1 only schematically shows a relative positional relationship of the lens and the optical film layer, but the present disclosure is not limited thereto.

Referring to Fig. 1, for example, the lens 10 may be a lens having a positive refractive power. For example, the optical film layer 20 includes a transflective film 21, a reflective polarizing layer 22, and a phase retardation film 23. The optical system utilizes the property of the reflective polarizing layer 22 to selectively reflect and transmit light of different polarized states in combination with the phase retardation film 23 to adjust the polarized states of the light so as to fold back the light between the transflective film 21 and the reflective polarizing layer 22. For example, the optical film layer 20 may further include a linear polarizing film 24. The linear polarizing film 24 is advantageous to reducing stray light in the optical system.

Referring to Fig. 1, for example, the transflective film 21 may be plated on a first surface 11 of the lens 10. For example, the transflective film 21, the reflective polarizing layer 22, and the phase retardation film 23 may be fixed to the lens 10 by means of attachment. For example, the phase retardation film 23, the reflective polarizing layer 22, and the linear polarizing film 24 are arranged in sequence on a side of the second surface 12 of the lens 10 away from the first surface 11.

In study, the inventor of the present application found that the concavo-convexity of a surface type of the lens determined the degree of difficulty of attachment of the optical film layer. For example, when the phase retardation film is attached to the second surface and the second surface is a plane, the phase retardation film can be attached more easily. A film attachment process of attaching the phase retardation film flatly is similar to a film attachment process of a cell phone panel, and there is substantially no stretching or compression of a film material of the phase retardation film itself. Therefore, the phase retardation film is substantially not wrinkled after the attachment is completed.

For example, when the phase retardation film is attached to the second surface and the second surface is a concave surface, the attachment process is relatively complicated. Some head-mounted display apparatuses have the requirements of a small display screen and a large angle of view, which enables the concavo-convexity of the surface (such as the second surface) of the lens to be relatively exaggerated, resulting in increased difficulty in attaching the optical film layer.

Fig. 2A to Fig. 2C are schematic diagrams of attachment of an optical film layer of the optical system.

Hereinafter, a process of attaching the optical film layer to a curved surface will be described. As shown in Fig. 2A, the phase retardation film 23, the reflective polarizing layer 22, and the linear polarizing film 24 in the optical film layer 20 may be firstly attached together. Thereafter, the optical film layer 20 of a planar structure shown in Fig. 2A may be converted into an optical film layer 20a of a curved surface structure shown in Fig. 2B by utilizing a jig. For example, a degree of curvature of the optical film layer 20a of the curved surface structure is substantially the same as a degree of curvature of the second surface 12. Thereafter, as shown in Fig. 2C, the optical film layer 20a of the curved surface structure may be attached to the concave surface (the second surface 12) of the lens 10. For example, the first surface 11 of the lens 10 may be plated with the transflective film 21.

Due to the relatively thick film material of the optical film layer itself, and the relatively low stretchability and relatively low thermoplasticity of most of the optical film layers, wrinkles are extremely likely to be generated in the process of converting the optical film layer from the planar structure to the curved surface structure. The wrinkles can result in local roughness and irregularities on the surface of the optical film layer. For example, the wrinkles can cause deviations in the overall surface type slope of an optical surface in the optical system, and can also cause high-frequency peak-to-valley value variations in local areas of the optical surface, thereby greatly affecting the imaging sharpness of the optical system. Therefore, how to minimize the wrinkles caused by the curved attachment is an important problem in a process flow of manufacturing head-mounted display apparatuses.

At least one embodiment of the present disclosure provides an optical system, including a lens assembly, a transflective film, a reflective polarizing layer, and a phase retardation film. The lens assembly includes at least two lenses, the at least two lenses include a first surface, a first attachment surface and a second surface arranged in sequence along a direction of an optical axis of the lens assembly. The transflective film is provided on a side of the first surface away from the second surface. The reflective polarizing layer is provided on a side of the second surface away from the first surface. The phase retardation film is provided on the first attachment surface. The first attachment surface is a curved surface, and a ratio of a minimum value of a curvature radius of the first attachment surface to a curvature radius of the second surface is not less than 3.

For the optical system provided in at least one embodiment of the present disclosure, a folded optical path can be formed by providing the transflective film, the reflective polarizing layer, and the phase retardation film, such that the optical system is smaller in volume and lighter. Furthermore, the ratio of the minimum value of the curvature radius of the first attachment surface to the curvature radius of the second surface is not less than 3, such that a degree of curvature of the first attachment surface is less than a degree of curvature of the second surface. Therefore, the first attachment surface can provide the phase retardation film with an attachment surface which tends to be a plane on the whole, which is advantageous to reducing the wrinkles generated in the process of attaching the phase retardation film and improving the yield.

At least one embodiment of the present disclosure provides an optical system, including a lens assembly, a transflective film, a reflective polarizing layer, and a phase retardation film. The lens assembly includes at least two lenses, wherein the at least two lenses include a first surface, a first attachment surface and a second surface arranged in sequence along a direction of an optical axis of the lens assembly; the transflective film is provided on a side of the first surface away from the second surface; the reflective polarizing layer is provided on a side of the second surface away from the first surface; the phase retardation film is provided on the first attachment surface; and the first attachment surface is a plane which intersects with and is not perpendicular to the optical axis of the lens assembly.

For the optical system provided in at least one embodiment of the present disclosure, the first attachment surface is provided as an inclined plane, thereby being advantageous to increasing the degree of freedom in designing each lens in the lens assembly. Furthermore, an edge-to-center thickness ratio of the lens including the first attachment surface in the lens assembly is easy to reach a suitable ratio range, thereby being advantageous to injection molding of the lens.

At least one embodiment of the present disclosure provides a display apparatus, the display apparatus including a display screen and the above optical system, wherein a display surface of the display screen is located on a side of the first surface away from the second surface.

The optical system and the display apparatus will now be described by way of some embodiments in combination with the accompanying drawings.

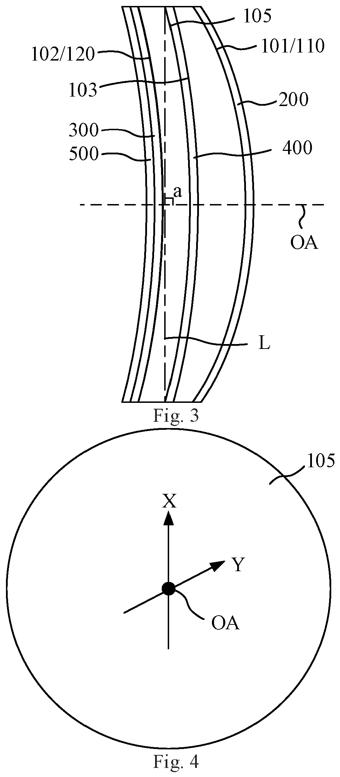

Fig. 3 is a schematic diagram of the optical system provided in one example in at least one embodiment of the present disclosure.

Referring to Fig. 3, the optical system includes a lens assembly 100, a transflective film 200, a reflective polarizing layer 300, and a phase retardation film 400. The lens assembly 100 includes at least two lenses, wherein the at least two lenses include a first surface 101, a first attachment surface 105 and a second surface 102 arranged in sequence along a direction of an optical axis OA of the lens assembly 100. For example, Fig. 3 schematically shows two lenses (a lens 110 and a lens 120), but the present disclosure is not limited thereto. For example, the first attachment surface 105 is located between the first surface 101 and the second surface 102. For example, light may be incident from a side of the first surface 101 away from the second surface 102 and emergent from a side of the second surface 102 away from the first surface 101.

Referring to Fig. 3, by providing the at least two lenses, it is advantageous to providing more attachment positions for optical film layers such as the transflective film 200, the reflective polarizing layer 300, and the phase retardation film 400. Thus, there is no need to firstly attach the reflective polarizing layer 300 and the phase retardation film 400 to form a composite film layer, such that wrinkles which may occur in the process of converting the composite film layer from a planar structure to a curved surface structure are reduced, and an attachment process of each film layer on each surface is easier.

Referring to Fig. 3, the transflective film 200 is provided on a side of the first surface 101 away from the second surface 102. For example, the first surface 101 is a convex surface, and the transflective film 200 may be plated on the first surface 101. The reflective polarizing layer 300 is provided on a side of the second surface 102 away from the first surface 101, and the phase retardation film 400 is provided on the first attachment surface 105. For example, light incidents on the lens assembly 100 after being transmitted through the transflective film 200 is configured to be folded back between the transflective film 200 and the reflective polarizing layer 300 and to be emergent from the reflective polarizing layer 300, thereby forming a folded optical path through the transflective film 200, the phase retardation film 400, and the reflective polarizing layer 300.

Referring to Fig. 3, the first attachment surface 105 is a curved surface. For example, the first attachment surface may be a rotationally symmetrical curved surface. For example, the rotationally symmetrical curved surface may be a spherical surface, an aspherical surface or a free-form surface. For example, the first attachment surface may be a non-rotationally symmetrical curved surface.

Referring to Fig. 3, a ratio of a minimum value of a curvature radius of the first attachment surface 105 to a curvature radius of the second surface 102 is not less than 3, such that a degree of curvature of the first attachment surface 105 is less than a degree of curvature of the second surface 102. Therefore, the first attachment surface 105 can provide the phase retardation film 400 with an attachment surface which tends to be a plane on the whole, which is advantageous to reducing the wrinkles generated in the process of attaching the phase retardation film 400 and improving the yield.

For example, when the first attachment surface is the rotationally symmetrical curved surface, the curvature radius of the first attachment surface in any direction (such as a first direction and a second direction) is equal, and the minimum value of the curvature radius of the first attachment surface is the curvature radius of the first attachment surface in any direction. For example, when the first attachment surface is a non-rotationally symmetrical curved surface, the radiuses of curvature of the first attachment surface in at least two directions (such as the first direction and the second direction) are different, and the minimum value of the curvature radius of the first attachment surface is the minimum value of the curvature radius of the first attachment surface in each direction.

For example, the second surface may be an aspherical surface or a free-form surface. For example, the second surface may be a rotationally symmetrical curved surface. For example, a curvature radius of the second surface in any direction is the same. However, the present disclosure is not limited thereto, the second surface may also be a non-rotationally symmetrical curved surface.

For example, when the curvature radius of the first attachment surface in one direction (such as the first direction) is the minimum value, the ratio of the curvature radius of the first attachment surface in this direction to the curvature radius of the second surface in the same direction is not less than 3. For example, when the second surface is a rotationally symmetrical curved surface, the ratio of the curvature radius of the first attachment surface in the first direction to the curvature radius of the second surface in any direction is not less than 3.

Referring to Fig. 3, for example, the transflective film 200 may transmit a part of light and reflect the other part of light. For example, the transflective film may have a transmissivity of 50% and a reflectance of 50%. For example, the transflective film may have a transmissivity of 60% and a reflectance of 40%. For example, the transflective film may have a transmissivity of 65% and a reflectance of 35%. The optical system provided in the present disclosure is not limited thereto, and the transmissivity and the reflectance of the transflective film may be set according to product requirements.

Referring to Fig. 3, for example, the reflective polarizing layer 300 is configured to reflect linearly polarized light of one property and transmit linearly polarized light of another property. For example, the function of the reflective polarizing layer is as follows: there is a light transmission axis direction in the plane of the film layer, a transmittance of a polarization component (such as linearly s-polarized light) of the incident light parallel to the light transmission axis direction is greater than a transmittance of a polarization component (such as linearly p-polarized light) perpendicular to the light transmission axis direction, and a reflectance of the polarization component (such as the linearly s-polarized light) parallel to the light transmission axis direction is less than a reflectance of the polarization component (such as the linearly p-polarized light) perpendicular to the light transmission axis direction. For example, the reflective polarizing layer 300 may also be referred to as a polarized beam splitting film. For example, a transmittance of polarized light parallel to the light transmission axis direction of the reflective polarizing layer 300 is not less than 85%, for example, not less than 90%, not less than 95%, and not less than 98%; and a reflectance of polarized light perpendicular to the light transmission axis direction of the reflective polarizing layer 300 is not less than 85%, for example, not less than 90%, not less than 95%, and not less than 98%.

Referring to Fig. 3, for example, the phase retardation film 400 is located between the reflective polarizing layer 300 and the transflective film 200. For example, the phase retardation film is configured such that the transmitted light achieves conversion between a circularly polarized state and a linearly polarized state. For example, the phase retardation film may be a 1/4 wave plate.

For example, the phase retardation film has the following characteristics: in the plane of the film layer, there is one direction having the lowest refractive index and one direction having the highest refractive index, which are respectively a fast axis and a slow axis, and a phase of polarized light parallel to the slow axis after passing through the phase retardation film is delayed by 1/4 wavelength compared with a phase of polarized light parallel to the fast axis after passing through the phase retardation film.

For example, an included angle between the slow axis of the phase retardation film and a light transmission axis of the reflective polarizing layer is 45 degrees.

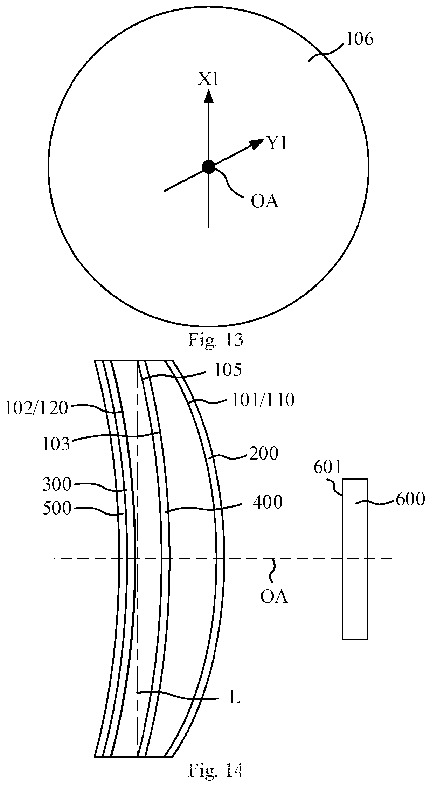

Referring to Fig. 3, when the optical system is applied in a display apparatus (such as a display apparatus shown in Fig. 14 in an example described later), the principle of a folded optical path is as follows: a wave plate may be provided on an emergent side of the display screen that is located on a side of the first surface 101 that is away from the second surface 102, image light emitted from the display screen is converted into right-handed circularly polarized light after passing through the wave plate; the right-handed circularly polarized light keeps a polarized state unchanged after being transmitted by the transflective film 200. The light reaches the phase retardation film 400 after being transmitted, the right-handed circularly polarized light incident on the phase retardation film 400 is converted into linearly p-polarized light; the linearly p-polarized light is reflected back by the reflective polarizing layer 300 to the phase retardation film 400, where a first reflection occurs. Afterwards, the linearly p-polarized light is converted into right-handed circularly polarized light after passing through the phase retardation film 400; the right-handed circularly polarized light reaches the transflective film 200 and is reflected at the transflective film 200, where a second reflection occurs. Because of half wave loss, the reflected light changes from right-handed circularly polarized light to left-handed circularly polarized light. The left-handed circularly polarized light reaches the phase retardation film 400 after being transmitted, and is transformed into linearly s-polarized light after transmitting through the phase retardation film 400, and then the linearly s-polarized light is transmitted through the reflective polarizing layer 300linear polarizing film to a human eye.

Referring to Fig. 3, the above-described folded optical path may change a polarized state of light propagating between the reflective polarizing layer 300 and the transflective film 200, implementing folding of a light path, so that an original focal length of the optical system is folded because of, for example, two reflections added by providing the reflective polarizing layer 300, the phase retardation film 400, and the transflective film 200 as described above, which greatly compresses space required between the human eye and the optical system, resulting in a smaller and lighter volume of the optical system.

Referring to Fig. 3, in some examples, the optical system further includes a linear polarizing film 500, wherein the linear polarizing film 500 is provided on a side of the reflective polarizing layer 300 away from the transflective film 200. For example, the linear polarizing film 500 may be a linear polarizer or a polarizer. For example, an optical axis of the linear polarizing film 500 coincides with an optical axis of the reflective polarizing layer 300, for example, the linear polarizing film 500 may be used for further filtering other stray light, thereby allowing only polarized light (such as the linearly s-polarized light) passing through the linear polarizing film 500 to enter the human eyes. For example, a three-layer laminated structure may be adopted for the linear polarizing film 500, a middle layer in the three-layer structure may be made of polyvinyl alcohol (PVA) added with dichroic molecules, at least one layer on both sides of the middle layer in the three-layer structure may be made of triacetate cellulose (TAC). For example, a surface of the linear polarizing film 500 that faces the air is subjected to anti-reflection treatment. For example, the surface of the linear polarizing film 500 that faces the air may be attached to a moth eye film.

Referring to Fig. 3, in some examples, the reflective polarizing layer 300 is provided on the second surface 102 to support the reflective polarizing layer 300 through the lens (such as the lens 120) in the lens assembly 100. For example, the ratio of the minimum value of the curvature radius of the first attachment surface 105 to the curvature radius of the second surface 102 is in a range from 3 to 5, so as to be advantageous to the attachment of the phase retardation film 400 while meeting the injection molding requirements of each lens. For example, the first attachment surface 105 and the second surface 102 are two surfaces of the same lens, thereby being advantageous to injection molding of each lens in the lens assembly 100. For example, the ratio of the minimum value of the curvature radius of the first attachment surface 105 to the curvature radius of the second surface 102 is in a range from 3.5 to 4.5. For example, the ratio of the minimum value of the curvature radius of the first attachment surface 105 to the curvature radius of the second surface 102 is in a range from 4. However, the present disclosure is not limited thereto, and a ratio relationship between the curvature radius of the first attachment surface and the curvature radius of the second surface may also be set according to actual needs.

In some examples, the first attachment surface includes at least one of a cylindrical surface, an elliptical cylindrical surface, a hyperbolic cylindrical surface, a parabolic cylindrical surface, a conical surface, an elliptical conical surface, a spherical surface, an ellipsoidal surface, an elliptical paraboloid, a hyperboloid of one sheet, a hyperboloid of two sheets, a hyperbolic paraboloid, and a torus.

For example, the first attachment surface may be a part of one of the cylindrical surface, the elliptical cylindrical surface, the hyperbolic cylindrical surface, the parabolic cylindrical surface, the conical surface, the elliptical conical surface, the spherical surface, the ellipsoidal surface, the elliptical paraboloid, the hyperboloid of one sheet, the hyperboloid of two sheets, the hyperbolic paraboloid, and the torus.

For example, the first attachment surface may be obtained by splicing two or more of the cylindrical surface, the elliptical cylindrical surface, the hyperbolic cylindrical surface, the parabolic cylindrical surface, the conical surface, the elliptical conical surface, the spherical surface, the ellipsoidal surface, the elliptical paraboloid, the hyperboloid of one sheet, the hyperboloid of two sheets, the hyperbolic paraboloid, and the torus. For example, the first attachment surface may be obtained by splicing a part of the cylindrical surface with a part of the spherical surface. For example, the first attachment surface may be obtained by splicing a part of the ellipsoidal surface with a part of the cylindrical surface. However, the present disclosure is not limited thereto, and the first attachment surface may be obtained by splicing any combination of the above surface types.

For example, the cylindrical surface, the elliptical cylindrical surface, the hyperbolic cylindrical surface, the parabolic cylindrical surface, the conical surface, the elliptical conical surface, the spherical surface, the ellipsoidal surface, the elliptical paraboloid, the hyperboloid of one sheet, the hyperboloid of two sheets, and the hyperbolic paraboloid are twelve surface types of quadric surfaces.

For example, the torus, also referred to as a bracelet surface, is a closed curved surface formed by a center of a circle in a three-dimensional space rotating around another circle which is located in a perpendicular plane relative to the circle.

In some examples, the first attachment surface is a ruled surface. For example, the ruled surface is a curved surface formed by continuous motion of a straight line (namely, a generatrix of the ruled surface). For example, in response to there being, for any point on the curved surface, a straight line passing through the point, the curved surface is referred to as the ruled surface. For example, the ruled surface has curvature of 0 in at least one direction. For example, the ruled surfaces include the cylindrical surface, the elliptical cylindrical surface, the hyperbolic cylindrical surface, the parabolic cylindrical surface, the conical surface, the elliptical conical surface, the hyperboloid of one sheet, and the hyperbolic paraboloid.

In some examples, the first attachment surface is a developable surface. The developable surface is a special ruled surface. For example, the developable surface refers to a curved surface which may be developed into a plane without creating any tears or wrinkles. When the first attachment surface is the developable surface, since the first attachment surface may be developed into the plane, accordingly, the phase retardation film attached to the first attachment surface does not need to be subjected to operation such as stretching. Thus, the attachment dimensionality of the phase retardation film may be reduced from three-dimensional curved attachment to two-dimensional flat attachment, thereby reducing the difficulty in attaching the film. For example, the developable surfaces include the cylindrical surface, the elliptical cylindrical surface, the hyperbolic cylindrical surface, the parabolic cylindrical surface, the conical surface, and the elliptical conical surface.

Fig. 4 is a schematic diagram of a first attachment surface provided in one example in at least one embodiment of the present disclosure.

Referring to Fig. 4, in some examples, a curvature radius of the first attachment surface 105 in a first direction X is different from a curvature radius of the first attachment surface 105 in a second direction Y, the first direction X intersects with the second direction Y, and the first direction X and the second direction Y respectively intersect with an optical axis OA. For example, the curvature radius of the first attachment surface 105 in the first direction X may be greater than the curvature radius of the first attachment surface 105 in the second direction Y. Thus, when the phase retardation film 400 is attached to the first attachment surface 105, the curvature of the first attachment surface 105 in the first direction X is closer to 0, which is advantageous to reducing wrinkles which may occur when the phase retardation film 400 is attached, thereby reducing the difficulty in attaching the film.

Referring to Fig. 4, designing the first attachment surface 105 to have different radiuses of curvature in different directions (such as the first direction X and the second direction Y) can enable the lens including the first attachment surface 105 to be unequal in thickness in different planes, which is advantageous to enabling an edge-to-center thickness ratio of each lens in the lens assembly 100 to meet injection molding requirements more easily. For example, the curvature radius of the first attachment surface 105 in other directions (such as a third direction respectively intersects with the first direction and the second direction) may be the same as or different from the curvature radius of the first attachment surface in the first direction X, which is not limited in the present disclosure.

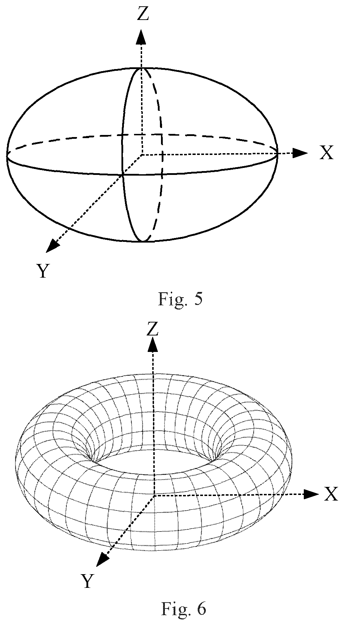

Fig. 5 shows a schematic diagram of an ellipsoidal surface.

Referring to Fig. 4 and Fig. 5, for example, when the first attachment surface 105 is a part of the ellipsoidal surface, the curvature of the ellipsoidal surface in an XZ plane is different from the curvature of the ellipsoidal surface in a YZ plane, thereby reducing the difficulty in attaching the phase retardation film.

Fig. 6 shows a schematic diagram of a torus.

Referring to Fig. 4 and Fig. 6, for example, when the first attachment surface 105 is a part of the torus, the curvature radius of the first attachment surface 105 in the first direction X is substantially greater than the curvature radius of the first attachment surface 105 in the second direction Y, such that the curvature of the first attachment surface 105 in the first direction X is closer to 0 compared with the curvature of the first attachment surface 105 in the second direction Y. Thus, the amount of stretching or compression of the phase retardation film in the first direction may be greatly reduced, so as to reduce the difficulty in attaching the phase retardation film and reduce wrinkles generated when the phase retardation film is attached.

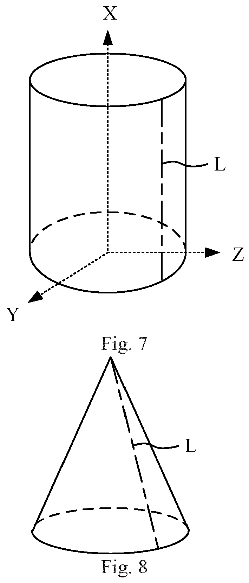

Fig. 7 shows a schematic diagram of a cylindrical surface.

Referring to Fig. 7, in some examples, the curvature of the first attachment surface 105 in the first direction X is 0. For example, the first attachment surface 105 has the property of the plane in the first direction X. When the phase retardation film 400 is attached, the phase retardation film 400 does not need to be bent in the first direction X, such that wrinkles are substantially not generated, which is advantageous to improving the imaging sharpness of the optical system.

Referring to Fig. 4 and Fig. 7, for example, when the first attachment surface 105 is a part of the cylindrical surface, the curvature of the first attachment surface 105 in the first direction X is 0, and the first direction X is parallel to a direction of a generatrix L of the cylindrical surface. When the phase retardation film is attached to the first attachment surface 105, the phase retardation film does not need to be compressed or stretched, and since the phase retardation film is made of a flexible material, the attachment process may be close to flat attachment, such that wrinkles are substantially not generated, which is advantageous to improving the imaging sharpness of the optical system.

Furthermore, referring to Fig. 4 and Fig. 7, the curvature of the first attachment surface 105 in a direction (such as the second direction Y) other than the first direction X is not 0, which enables a thickness of the lens including the first attachment surface intercepted by the XY plane to be different from a thickness thereof intercepted by the YZ plane, thereby being advantageous to an edge-to-center thickness ratio of the lens including the first attachment surface meeting optical design requirements.

In some display apparatuses, an outer contour shape of a display surface of a display screen is rectangular. In order to match the shape of the display surface, an outer contour shape of each lens in the lens assembly is also designed to be approximately rectangular. When a length of a long side of the rectangle is greater than a length of a short side of the rectangle, an extension direction of the short side is parallel to the first direction, and an extension direction of the long side is parallel to the second direction, such that the edge-to-center thickness ratio of the lens meets injection molding requirements more easily. For example, the curvature of the first attachment surface may be 0 in the extension direction of the short side of the lens.

Fig. 8 shows a schematic diagram of a conical surface.

Referring to Fig. 4 and Fig. 8, for example, when the first attachment surface 105 is a part of the conical surface, the curvature of the first attachment surface 105 in the first direction X is 0, and the first direction X is parallel to a direction of a generatrix L of the conical surface. For example, the conical surface may be considered as a special case of the cylindrical surface. For example, the conical surface may be considered as a special cylindrical surface (such as a truncated cone) having an upper bottom surface and a lower bottom surface with different radiuses of curvature. For example, when a part of the conical surface is intercepted to obtain the first attachment surface, the intercepted part is close to a part of the cylindrical surface when the curvature radius of the upper bottom surface and the curvature radius of the lower bottom surface of the intercepted part is close to be equal. Thus, it is possible to enable the difficulty in attaching the phase retardation film to the conical surface to be lower, for example, the difficulty in attaching the film is close to the difficulty in attaching the phase retardation film to the cylindrical surface.

Referring to Fig. 3, in some examples, a generatrix L of the first attachment surface 105 passing through the optical axis OA is perpendicular to the optical axis OA. For example, an included angle a between the generatrix L and the optical axis OA is 90°. For example, referring to Fig. 3 and Fig. 7, the first attachment surface 105 may be a part of one cylindrical surface, and an axis of the cylindrical surface is perpendicular to the optical axis OA. For example, referring to Fig. 3 and Fig. 8, the first attachment surface 105 may be a part of one conical surface, a generatrix L of the conical surface is perpendicular to the optical axis OA, and an axis of the conical surface intersects with and is not perpendicular to the optical axis OA.

Referring to Fig. 3 and Fig. 7, for example, when the first attachment surface 105 is a part of the cylindrical surface, the generatrix of the first attachment surface is a straight line parallel to the axis of the cylindrical surface. Referring to Fig. 3 and Fig. 8, for example, when the first attachment surface 105 is a part of the conical surface, a moving straight line passing through a fixed point moves along a determined curve to form the conical surface, and the straight line is the generatrix of the conical surface.

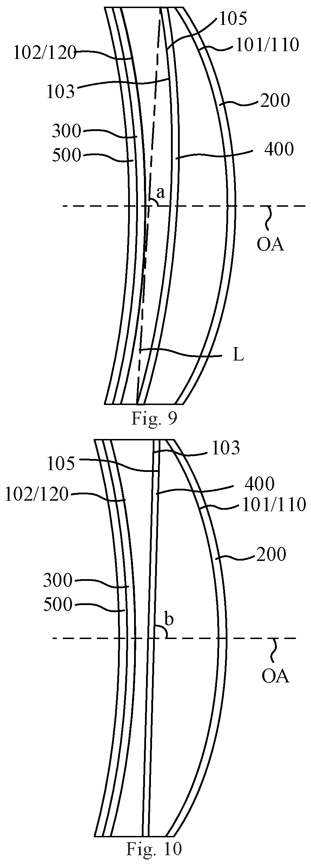

Fig. 9 to Fig. 12 are schematic diagrams of the optical systems provided in different examples in at least one embodiment of the present disclosure.

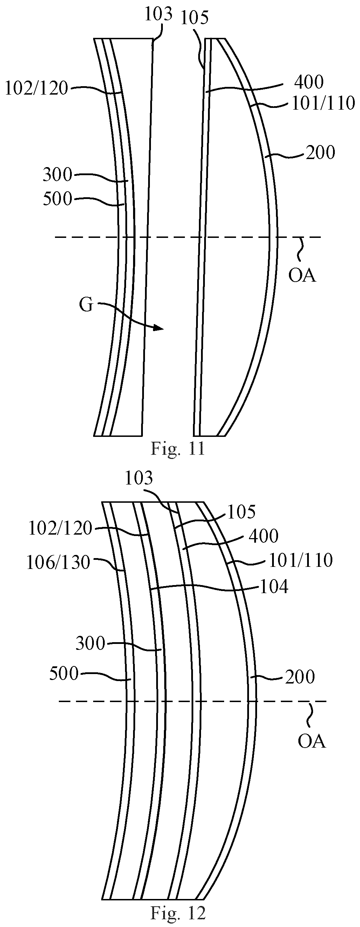

The optical system shown in Fig. 9 is different from the optical system shown in Fig. 3 in that a relationship between the first attachment surface and the optical axis in Fig. 9 is different from a relationship between the first attachment surface and the optical axis in Fig. 3. The optical system shown in Fig. 10 is different from the optical system shown in Fig. 9 in that the first attachment surface in Fig. 9 is a curved surface and the first attachment surface in Fig. 10 is a plane. The optical system shown in Fig. 11 is different from the optical system shown in Fig. 10 in that an air gap is provided between the first attachment surface and the third surface in Fig. 11. The optical system shown in Fig. 12 is different from the optical system shown in Fig. 3 in that the number of lenses of the optical system shown in Fig. 12 is different from the number of lenses of the optical system shown in Fig. 3, and an attachment position of the optical film layer in the optical system shown in Fig. 12 is different from an attachment position of the optical film layer in the optical system shown in Fig. 3. It should be understood that there may be other similarities or differences between Fig. 3 and Fig. 9 to Fig. 12, which will not be described in detail herein in the present disclosure.

Referring to Fig. 9, in some examples, a generatrix L of the first attachment surface 105 passing through the optical axis OA is not perpendicular to the optical axis OA. For example, the included angle a between the generatrix L and the optical axis OA is less than 90°. For example, the first attachment surface includes a plurality of generatrices, all of the generatrices are not perpendicular to the optical axis. For example, the lens assembly 100 includes a first lens 110 which includes a first surface 101 and a first attachment surface 105 oppositely provided on the optical axis OA. The edges of the first lens 110 located on two sides of the optical axis OA have different thicknesses in the extension direction of the generatrix L passing through the optical axis OA. Thus, it is possible to increase the degree of freedom in designing each lens in the lens assembly 100. For example, optical design requirements may be met more easily, such that the edge-to-center thickness ratio of the lens is within a suitable ratio range.

For example, when the first attachment surface is a part of the cylindrical surface, the generatrix of the first attachment surface passing through the optical axis is provided obliquely with respect to the optical axis, and thus the cylindrical surface is provided obliquely with respect to the optical axis. For example, when the first attachment surface is the conical surface, the generatrix of the first attachment surface passing through the optical axis is provided obliquely with respect to the optical axis, and thus the conical surface is provided obliquely with respect to the optical axis. However, the present disclosure is not limited thereto, and for example, the first attachment surface may also be other curved surfaces provided obliquely, which will not be described in detail herein.

Referring to Fig. 10, at least one embodiment of the present disclosure provides an optical system. The optical system includes a lens assembly 100, a transflective film 200, a reflective polarizing layer 300, and a phase retardation film 400. The lens assembly 100 includes at least two lenses, wherein the at least two lenses include a first surface 101, a first attachment surface 105 and a second surface 102 arranged in sequence along a direction of an optical axis OA of the lens assembly 100. The transflective film 200 is provided on a side of the first surface 101 away from the second surface 102. The reflective polarizing layer 300 is provided on a side of the second surface 102 away from the first surface 101. The phase retardation film 400 is provided on the first attachment surface 105. For example, reference may be made to the related description in the foregoing examples for the lens assembly 100, the transflective film 200, the reflective polarizing layer 300, and the phase retardation film 400, which will not be described in detail herein in the present disclosure.

Referring to Fig. 10, the first attachment surface 105 is a plane which intersects with and is not perpendicular to the optical axis OA of the lens assembly 100. For example, an included angle b between the plane and the optical axis OA is less than 90°. The first attachment surface 105 is provided as the plane, and wrinkles are substantially not generated when the phase retardation film 400 is attached to the first attachment surface 105. Furthermore, providing the first attachment surface 105 as an inclined plane is advantageous to improving the degree of freedom in designing each lens in the lens assembly 100. For example, an edge-to-center thickness ratio of the lens including the first attachment surface 105 in the lens assembly 100 is easy to reach a suitable ratio range, thereby being advantageous to injection molding of the lens.

Referring to Fig. 10, in some examples, the at least two lenses include a first lens 110 and a second lens 120, and the at least two lenses further include a third surface 103. The first surface 101 and the first attachment surface 105 are two surfaces of the first lens 110, and the third surface 103 and the second surface 102 are two surfaces of the second lens 120. For example, the transflective film 200 and the phase retardation film 400 may be respectively provided on the two surfaces of the first lens 110.

In some examples, the first surface and the third surface are two surfaces of the first lens, and the first attachment surface and a fourth surface are two surfaces of the second lens. For example, the transflective film and the phase retardation film may be respectively provided on two surfaces of different lenses.

For example, at the stage of optical design, a single lens may be firstly formed, one of the surfaces of the single lens has the same surface type as the first surface, and the other of the surfaces has the same surface type as the second surface. Thereafter, the single lens is divided into two pieces according to the surface type of the first attachment surface, so as to obtain the first lens and the second lens.

In some examples, the edge-to-center thickness ratio of the lens including the first attachment surface is not less than 1/3, thereby being advantageous to injection molding of the lens. For example, the lens provided with the first attachment surface is the first lens, and the first lens is a convex lens. For example, the edge-to-center thickness ratio of the first lens may be in a range from 1/3 to 2/3. For example, the edge-to-center thickness ratio of the first lens may be in a range from 2/3 to 1. However, the present disclosure is not limited thereto, as long as the edge-to-center thickness ratio of the lens provided with the first attachment surface is advantageous to achieving injection molding of the lens.

For example, the center of the lens may be a geometric center of the lens. For example, the edge of the lens is provided around the center of the lens. For example, the optical axis may pass through the center of the lens, and the edge of the lens may be a part of the lens away from the optical axis.

In some examples, the edge-to-center thickness ratio of the first lens is not less than 1/3, and the edge-to-center thickness ratio of the second lens is not less than 1/3. For example, the edge-to-center thickness ratio of the first lens may be in a range from 1/3 to 2/3. For example, the edge-to-center thickness ratio of the first lens may be in a range from 2/3 to 1. For example, the edge-to-center thickness ratio of the second lens may be in a range from 1/3 to 2/3. For example, the edge-to-center thickness ratio of the second lens may be in a range from 2/3 to 1.

Referring to Fig. 3, Fig. 9 and Fig. 10, in some examples, the phase retardation film 400 may be bonded between the first attachment surface 105 and the third surface 103. For example, referring to Fig. 3 and Fig. 9, the first attachment surface 105 may be a convex surface, thereby being advantageous to the attachment of the phase retardation film 400. For example, the third surface 103 may be a concave surface matching the first attachment surface 105. For example, the distance between the first attachment surface 105 and the third surface 103 in the direction of the optical axis OA is equally everywhere. For example, when no film layer is provided between the first attachment surface 105 and the third surface 103, the first attachment surface 105 and the third surface 103 can substantially fully fit each other. For example, referring to Fig. 10, the first attachment surface 105 and the third surface 103 may both be planes.

However, the present disclosure is not limited thereto, for example, the first attachment surface may be a concave surface. For example, the first attachment surface may be a plane, and the third surface may be a concave surface. For example, the first attachment surface may be a plane, and the third surface may be a convex surface. For example, a gap between the phase retardation film and the third surface may be filled with optical adhesive after the phase retardation film is attached to the first attachment surface.

Referring to Fig. 11, in some examples, an air gap G is provided between the third surface 103 and the first attachment surface 105 to improve the degree of freedom in designing the surface of each lens. Fig. 11 schematically shows that the third surface 103 and the first attachment surface 105 are both planes, but the present disclosure is not limited thereto. For example, when the first attachment surface is a plane, the third surface may be a plane or a curved surface. For example, when the first attachment surface is a curved surface, the third surface may be a plane or a curved surface. For example, when the first attachment surface is a convex surface, the third surface may be a concave surface. For example, when the first attachment surface is a concave surface, the third surface may be a convex surface. Thus, the first attachment surface and the third surface each have a greater degree of freedom in designing the surface type, and it is advantageous to enabling the edge-to-center thickness ratio of each lens to meet design requirements, thereby being advantageous to injection molding of each lens. In addition, a difference value in the refractive index between an air medium and a lens medium may also be utilized for reducing chromatic aberration of the optical system.

Referring to Fig. 12, in some examples, the at least two lenses further include a second attachment surface 106 which is located on a side of the reflective polarizing layer 300 away from the second surface 102, and the linear polarizing film 500 is provided on the second attachment surface 106. For example, the linear polarizing film 500 may be attached to the second attachment surface 106. The second attachment surface 106 can provide the linear polarizing film 500 with more attachment positions, and enable the attachment process of the linear polarizing film 500 to be simpler.

For example, it is simpler to attach the linear polarizing film to the second attachment surface in the lens assembly than to attach the linear polarizing film to the reflective polarizing layer. For example, referring to Fig. 12, the second attachment surface 106 is a surface of one lens (such as the third lens 130) in the lens assembly 100, the surface of the lens is smoother, and the surface of the lens is less likely to deform or be scratched, thereby being advantageous to maintaining the surface smoothness in the attachment process of the film.

Fig. 13 is a schematic diagram of a second attachment surface provided in one example in at least one embodiment of the present disclosure.

Referring to Fig. 12 and Fig. 13, the second attachment surface 106 is a curved surface, and a curvature radius of the second attachment surface 106 in a third direction X1 is different from a curvature radius of the second attachment surface 106 in a fourth direction Y1, the third direction X1 intersects with the fourth direction Y1, and the third direction X1 and the fourth direction Y1 respectively intersect with the optical axis OA. For example, the curvature radius of the second attachment surface 106 in the third direction X1 may be greater than the curvature radius of the second attachment surface 106 in the fourth direction Y1. Thus, when the phase retardation film 400 is attached to the second attachment surface 106, the curvature of the second attachment surface 106 in the third direction X1 is closer to 0, which is advantageous to reducing wrinkles which may occur when the linear polarizing film 500 is attached, and reducing the difficulty in attaching the film.

For example, in combination with the foregoing embodiments, the third direction may be the same as the first direction, or may be different from the first direction. For example, the fourth direction may be the same as the second direction, or may be different from the second direction. For example, the curvature of the first attachment surface in the first direction is 0 and the curvature of the second attachment surface in the third direction is 0, such that the first direction and the third direction may be the same to be advantageous to the assembling of the optical system.

Referring to Fig. 12, for example, the at least two lenses include a first lens 110, a second lens 120, and a third lens 130, wherein the second lens 120 is located between the first lens 110 and the third lens 130. Reference may be made to the related description in the foregoing examples for the first lens and the second lens, which will not be described in detail herein.

Referring to Fig. 12, for example, the third lens 130 may include the second attachment surface 106 and a fourth surface 104 oppositely provided on the optical axis OA. For example, the second attachment surface 106 is located on a side of the fourth surface 104 away from the reflective polarizing layer 300. For example, the reflective polarizing layer 300 may be bonded between the fourth surface 104 and the second surface 102. For example, the fourth surface 104 may match the second surface 102. For example, when no film layer is provided between the fourth surface 104 and the second surface 102, the fourth surface 104 and the second surface 102 can substantially fully fit each other.

For example, an air gap may also be provided between the reflective polarizing layer and the third lens, thereby increasing the degree of freedom in designing each surface in the third lens. For example, the reflective polarizing layer may be bonded to the third lens. For example, the second attachment surface may be located between the fourth surface and the reflective polarizing layer, and a gap between the linear polarizing film and the reflective polarizing layer may be filled with optical adhesive, which is not limited in the present disclosure.

For example, the second attachment surface may include a part of at least one of a cylindrical surface, an elliptical cylindrical surface, a hyperbolic cylindrical surface, a parabolic cylindrical surface, a conical surface, an elliptical conical surface, a spherical surface, an ellipsoidal surface, an elliptical paraboloid, a hyperboloid of one sheet, a hyperboloid of two sheets, a hyperbolic paraboloid, and a torus.

For example, a surface type of the second attachment surface may be designed in combination with the polarization and reflection of light by the reflective polarizing layer, such that the linear polarizing film attached to the second attachment surface better filters light rays emerging from the reflective polarizing layer.

Fig. 14 is a schematic diagram of a display apparatus provided in one example in at least one embodiment of the present disclosure.

At least one embodiment of the present disclosure provides a display apparatus, including a display screen 600 and the above optical system, wherein a display surface 601 of the display screen 600 is located on a side of the first surface 101 away from the second surface 102. Since the optical system according to the embodiment of the present disclosure is used for the above display apparatus, it also has corresponding beneficial technical effects, which will not be described in detail herein.

It should be understood that the display screen shown in Fig. 14, in combination with the optical system shown in Fig. 3 and Fig. 9 to Fig. 12, may form different display apparatuses. For example, the display surface of the display screen is located on a focal plane on a light incident side of the optical system.

For example, the display screen may be a display screen of any type, such as a liquid crystal display screen, an organic light-emitting diode display screen, an inorganic light-emitting diode display screen, a quantum dot display screen, and a projector (such as an LCOS micro projector), etc.

For example, the display screen is the liquid crystal display screen having a pixel size of approximately more than twenty micrometers. For example, the display screen is the organic light-emitting diode display screen having the pixel size of approximately a few micrometers.

For example, the display apparatus may be a virtual reality display apparatus. For example, the virtual reality display apparatus may be a display apparatus which adopts the folded optical path with ultra-short focal length.

For example, the display apparatus may be a near-eye display apparatus, and the near-eye display apparatus may be a wearable VR helmet, VR glasses, and the like, and the embodiments of the present disclosure are not limited thereto.

The following statements should be noted:
(1) In the accompanying drawings of the embodiments of the present disclosure, the drawings involve only the structure(s) in connection with the embodiment(s) of the present disclosure, and other structure(s) can be referred to common design(s).
(2) In case of no conflict, features in one embodiment or in different embodiments can be combined.

What have been described above are only specific implementations of the present disclosure, the protection scope of the present disclosure is not limited thereto, and the protection scope of the present disclosure should be based on the protection scope of the claims

## Claims

1. An optical system, comprising:
a lens assembly (100), comprising at least two lenses, the at least two lenses comprising a first surface (101), a first attachment surface (105) and a second surface (102) arranged in sequence along a direction of an optical axis (OA) of the lens assembly (100);
a transflective film (200), provided on a side of the first surface (101) away from the second surface (102);
a reflective polarizing layer (300), provided on a side of the second surface (102) away from the first surface (101); and
a phase retardation film (400), provided on the first attachment surface (105);
wherein the first attachment surface (105) is a curved surface, and a ratio of a minimum value of a curvature radius of the first attachment surface (105) to a curvature radius of the second surface (102) is not less than 3.

2. The optical system according to claim 1, wherein the reflective polarizing layer (300) is provided on the second surface (102), and the ratio of the minimum value of the curvature radius of the first attachment surface (105) to the curvature radius of the second surface (102) is in a range from 3 to 5.

3. The optical system according to claim 1 or claim 2, wherein a curvature radius of the first attachment surface (105) in a first direction is different from a curvature radius of the first attachment surface (105) in a second direction; and
the first direction intersects with the second direction, and the first direction and the second direction respectively intersect with the optical axis (OA).

4. The optical system according to claim 3, wherein a curvature of the first attachment surface (105) in the first direction is 0.

5. The optical system according to any one of claims 1 to 4, wherein the first attachment surface (105) comprises at least one of a cylindrical surface, an elliptical cylindrical surface, a hyperbolic cylindrical surface, a parabolic cylindrical surface, a conical surface, an elliptical conical surface, a spherical surface, an ellipsoidal surface, an elliptical paraboloid, a hyperboloid of one sheet, a hyperboloid of two sheets, a hyperbolic paraboloid, and a torus.

6. The optical system according to any one of claims 1 to 5, wherein the first attachment surface (105) is a ruled surface.

7. The optical system according to claim 6, wherein the first attachment surface (105) is a developable surface.

8. The optical system according to claim 6 or claim 7, wherein a generatrix (L) of the first attachment surface (105) passing through the optical axis (OA) is perpendicular to the optical axis (OA); or
a generatrix (L) of the first attachment surface (105) passing through the optical axis (OA) is not perpendicular to the optical axis (OA).

9. An optical system, comprising:
a lens assembly (100), comprising at least two lenses, the at least two lenses comprising a first surface (101), a first attachment surface (105) and a second surface (102) arranged in sequence along a direction of an optical axis (OA) of the lens assembly (100);
a transflective film (200), provided on a side of the first surface (101) away from the second surface (102);
a reflective polarizing layer (300), provided on a side of the second surface (102) away from the first surface (101); and
a phase retardation film (400), provided on the first attachment surface (105);
wherein the first attachment surface (105) is a plane which intersects with and is not perpendicular to the optical axis (OA) of the lens assembly (100).

10. The optical system according to claim 9, wherein an edge-to-center thickness ratio of a lens including the first attachment surface (105) is not less than 1/3.

11. The optical system according to any one of claims 1 to 10, wherein the at least two lenses comprise a first lens (110) and a second lens (120), and the at least two lenses further comprise a third surface (103); and
one of the first attachment surface (105) and the third surface (103) is a surface of the first lens (110), and the other is a surface of the second lens (120).

12. The optical system according to claim 11, wherein the phase retardation film (400) is bonded between the first attachment surface (105) and the third surface (103); or
an air gap (G) is provided between the third surface (103) and the first attachment surface (105).

13. The optical system according to claim 12, wherein an edge-to-center thickness ratio of the first lens (110) is not less than 1/3, and an edge-to-center thickness ratio of the second lens (120) is not less than 1/3.

14. The optical system according to any one of claims 1 to 13, further comprising a linear polarizing film (500);
wherein the linear polarizing film (500) is provided on a side of the reflective polarizing layer (300) away from the transflective film (200);
the at least two lenses further comprise a second attachment surface (106);
the second attachment surface (106) is located on a side of the reflective polarizing layer (300) away from the second surface (102), and the linear polarizing film (500) is provided on the second attachment surface (106);
the second attachment surface (106) is a curved surface, and a curvature radius of the second attachment surface (106) in a third direction is different from a curvature radius of the second attachment surface (106) in a fourth direction; and
the third direction intersects with the fourth direction, and the third direction and the fourth direction respectively intersect with the optical axis (OA).

15. A display apparatus, comprising a display screen (600) and the optical system according to any one of claims 1 to 14, wherein a display surface (601) of the display screen (600) is located on the side of the first surface (101) away from the second surface (102).
